# EUROPÄISCHE PATENTSCHRIFT

(11) **EP 0 728 818 B1**
(45) Veröffentlichungstag und Bekanntmachung des Hinweises auf die Patenterteilung: **25.07.2001**
(21) Anmeldenummer: 96810097.4
(22) Anmeldetag: 19.02.1996
(51) Int. Cl.: C09B 67/22, C09B 62/09, C09B 62/453, D06P 3/10

(54) **Azoarbstoffmischungen und ihre Verwendung**
Mixtures of azo dyes and their use
Mélanges de colorants azoiques et leur utilisation

(30) Priorität: 27.02.1995 CH 55495
(43) Veröffentlichungstag der Anmeldung: 28.08.1996
(73) Patentinhaber: Ciba Specialty Chemicals Holding Inc., 4057 Basel (CH)
(72) Erfinder: Hannemann, Klaus, Dr., 79540 Lörrach (DE); Lehmann, Urs, Dr., 4052 Basel (CH)

(56) Entgegenhaltungen:
- EP-A- 0 292 825
- EP-A- 0 581 733
- EP-A- 0 632 107
- EP-A- 0 647 683

## Beschreibung

Die vorliegende Erfindung betrifft Mischungen von Azofarbstoffen, die insbesondere zum Färben oder Bedrucken von natürlichen oder synthetischen Polyamidfasermaterialien geeignet sind und dabei Färbungen oder Drucke mit guten Allgemeinechtechtheiten ergeben.

Aus der EP-A-0 632 107 sind wasserlösliche, faserreaktive Disazoverbindungen enthaltend zwei Phenyl- und einen Naphthylrest, sowie Gemische dieser Verbindungen mit anderen Farbstoffen bekannt, die zum Färben und Bedrucken von carbonamidhaltigem Material dienen.

Gegenstand der vorliegenden Erfindung sind somit Farbstoffgemische enthaltend
(a) eine Verbindung der Formel 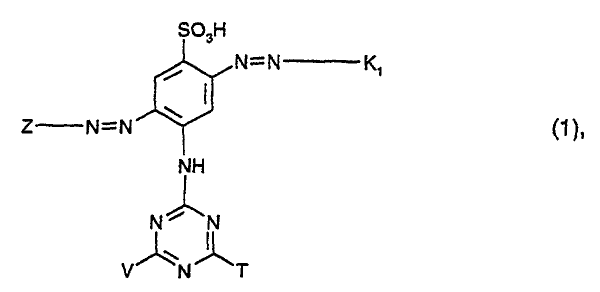 worin
   K₁ ein unsubstituierter oder durch Hydroxy, Amino, N-C₁-C₄-Alkylamino, C₂-C₄-Alkanoylamino, Benzoylamino, Sulfo oder einen Rest der Formel -SO₂-Y weitersubstituierter Naphthylrest ist,
   Z den Rest einer Diazokomponente der Benzol- oder Naphthalinreihe bedeutet, welche mindestens einen faserreaktiven Rest der Formel

      - SO₂ - Y (3a),

      - CONH - (CH₂)ₘ - SO₂ - Y (3b),

      - CONH - (CH₂)ₘ₁ - O - (CH₂)ₘ - SO₂ - Y (3c),

      - (O)ₚ - (CH₂)_{q} - CONH - (CH₂)ₘ - SO₂ - Y (3d),

      - NH - CO - CHX - CH₂X (3e)

      oder

      - NH - CO - CX = CH₂ (3f)

      aufweist,
   Y Vinyl oder einen Rest -CH₂-CH₂-U bedeutet und U eine Abgangsgruppe ist,
   X für Chlor oder Brom steht,
   p die Zahl 0 oder 1 und m, m1 und q unabhängig voneinander je eine ganze Zahl von 1 bis 6 bedeuten,
   T für Chlor, Fluor, Brom, 3-Carboxypyridin-1-yl oder 3-Carbamoylpyridin-1-yl steht,
   V unabhängig die Bedeutung von T hat oder für einen nicht-reaktiven Rest aus der Gruppe Hydroxy, C₁-C₄-Alkoxy, Phenoxy, C₁-C₄-Alkylthio, Morpholino und gegebenenfalls substituiertes Amino oder für einen Reaktivrest der Formel 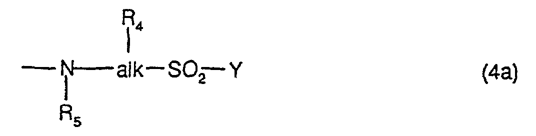 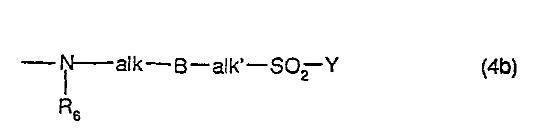 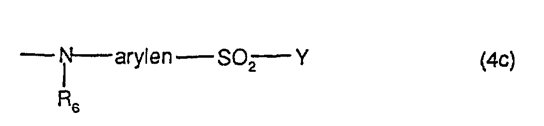 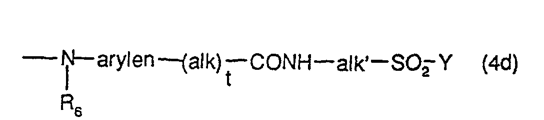 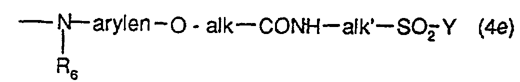 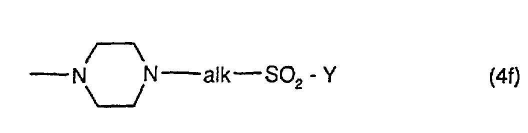 oder 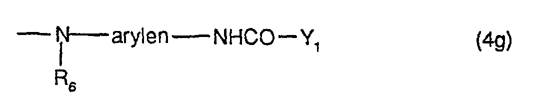 steht,
   R₄ Wasserstoff, Hydroxy, Sulfo, Sulfato, Carboxy, Cyano, Halogen, C ₁-C₄-Alkoxycarbonyl, Carbamoyl oder eine Gruppe -SO₂-Y, worin Y die zuvor angegebene Bedeutung hat, ist,
   R₅ Wasserstoff, gegebenenfalls durch Hydroxy, Sulfo, Sulfato, Carboxy oder Cyano substituiertes C₁-C₄-Alkyl oder ein Rest 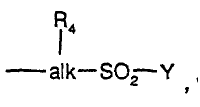 worin R₄ und Y jeweils die zuvor angegebene Bedeutung haben, ist,
   R₆ für Wasserstoff oder C₁-C₄-Alkyl steht,
   alk und alk' unabhängig voneinander je C₁-C₆-Alkylen sind,
   arylen einen unsubstituierten oder durch Sulfo, Carboxy, Hydroxy, C₁-C₄-Alkyl, C₁-C₄-Alkoxy oder Halogen substituierten Phenylen- oder Naphthylenrest bedeutet,
   Y₁ für eine Gruppe -CHX-CH₂X oder -CX=CH₂ steht , worin X die oben angegebene Bedeutung hat,
   B ein Rest -O- oder -NR₆-, worin R₆ die oben angegebene Bedeutung hat, ist, und
   t für die Zahl 0 oder 1 steht, und
(b) eine Verbindung der Formel 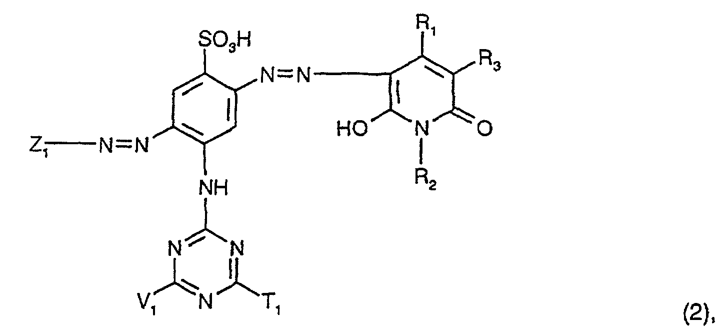 worin
   R₁ und R₂ unabhängig voneinander je C₁-C₄-Alkyl sind,
   R₃ Carbamoyl, Sulfomethyl oder Cyano bedeutet, und
   T₁ unabhängig die zuvor für T angegebene Bedeutung, V ₁ unabhängig die zuvor für V angegebene Bedeutung und Z₁ unabhängig die zuvor für Z angegebene Bedeutung haben.

Unter C₁-C₄-Alkyl ist hierbei generell Methyl, Ethyl, n- oder iso-Propyl oder n-, iso-, sec.- oder tert.-Butyl zu verstehen. C₁-C₄-Alkoxy umfasst generell Methoxy, Ethoxy, n- oder iso-Propoxy und n-, iso-, sec.- oder tert.-Butoxy. Halogen steht generell z.B. für Fluor, Brom oder insbesondere Chlor. Beispiele für C₂-C₄-Alkanoylamino sind Acetylamino oder Propionylamino. C₁-C₄-Alkoxycarbonyl bedeutet generell Methoxycarbonyl, Ethoxycarbonyl, n- oder iso-Propoxycarbonyl und n-, iso-, sec.- oder tert.-Butoxycarbonyl. Beispiele für C₁-C₄-Alkylthio sind Methylthio oder Ethylthio. Beispiele für N-C₁-C₄-Alkylamino sind N-Methylamino, N-Ethylamino, N-(n-Propyl)- oder N-(iso-Propyl)-amino oder N-(n-Butyl)-, N-(iso-Butyl)-, N-(sec.-Butyl)- oder N-(tert.-Butyl)-amino.

K₁ steht in Formel (1) bevorzugt für einen 1- oder 2-Naphthylrest, der durch 1 bis 4 gleiche oder verschiedene Reste aus der Gruppe Hydroxy, Amino, N-Methyl- oder N-Ethylamino, Acetylamino, Benzoylamino und Sulfo weitersubstituiert ist K₁ steht besonders bevorzugt für einen 1-Naphthylrest, der 1 bis 4 gleiche oder verschiedene Reste aus der Gruppe Hydroxy, Amino und Sulfo trägt. K₁ steht insbesondere bevorzugt für den 2-Amino-6-sulfo-8-hydroxy-1-naphthyl- oder 2-Amino-8-hydroxy-3,6-disulfo-1-naphthylrest.

Z bedeutet in Formel (1) einen Phenyl- oder Naphthylrest, der ausser faserreaktiven Resten der Formeln (3a) bis (3f) die bei organischen Farbstoffen üblichen Substituenten aufweisen kann. Als solche Substituenten seien genannt z.B. C₁-C₄-Alkyl, C₁-C₄-Alkoxy, Halogen, Sulfo, Hydroxy oder Carboxy.

Bedeutet Y einen Rest -CH₂-CH₂-U, so kann es sich bei der Abgangsgruppe U z.B. um -Cl, -Br, -F, -OSO₃H, -SSO₃H, -OCO-CH₃, -OPO₃H₂, -OCO-C₆H₅, -OSO₂-C₁-C₄-Alkyl oder -OSO₂-N(C₁-C₄-Alkyl)₂ handeln. Bevorzugt ist U eine Gruppe der Formel -Cl, -OSO₃H, -SSO₃H, -OCO-CH₃, -OCO-C₆H₅ oder-OPO₃H₂, insbesondere -Cl oder -OSO₃H und besonders bevorzugt -OSO₃H.

Y bedeutet bevorzugt Vinyl, β-Chlorethyl, β-Sulfatoethyl, β-Thiosulfatoethyl,β-Acetoxyethyl, β-Phenoxyethyl oder β-Phosphatoethyl und besonders bevorzugt β-Sulfatoethyl oder Vinyl.

X bedeutet bevorzugt Brom.

m und m1 stehen unabhängig voneinander je bevorzugt für die Zahl 2, 3 oder 4, besonders bevorzugt für die Zahl 2 oder 3 und insbesondere bevorzugt für die Zahl 2. p bedeutet vorzugsweise die Zahl 0, und q steht vorzugsweise für die Zahl 1, 2 oder 3 und besonders bevorzugt für die Zahl 1 oder 2.

Z bedeutet bevorzugt einen Phenylrest, der einen faserreaktiven Rest der Formel (3a) oder (3b) trägt und weiter unsubstituiert oder durch Sulfo, Methyl, Methoxy, Chlor, Hydroxy oder Methoxy substituiert ist, oder einen 1- oder 2-Naphthylrest, der einen faserreaktiven Rest der Formel (3a) trägt und weiter unsubstituiert oder durch Sulfo substituiert ist.

Eine bevorzugte Ausführungsform der vorliegenden Erfindung betrifft Verbindungen der Formel (1), worin Z ein faserreaktiver Rest der Formel 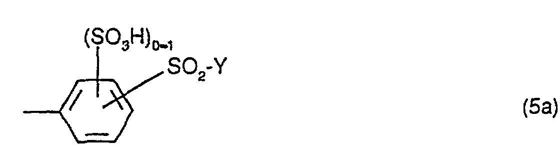 oder 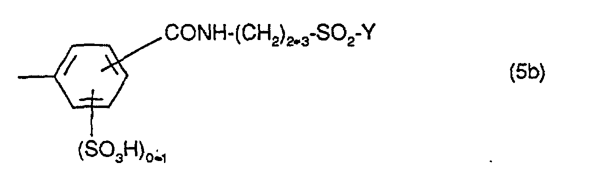 ist und Y Vinyl oder β-Sulfatoethyl bedeutet.

T bedeutet bevorzugt Fluor oder Chlor und besonders bevorzugt Chlor.

Bedeutet V einen nicht-reaktiven gegebenenfalls substituierten Aminorest, so kann es sich z.B. um Amino; N-C₁-C₄-Alkylamino oder N,N-Di-C₁-C₄-Alkylamino, wobei das Alkyl jeweils z.B. durch Sulfo, Sulfato, Hydroxy, Carboxy oder Phenyl substituiert sein kann; Cyclohexylamino; Phenylamino oder Naphthylamino, wobei das Phenyl oder Naphthyl jeweils z.B. durch C₁-C₄-Alkyl, C₁-C₄-Alkoxy, Amino, C₂-C₄-Alkanoylamino, Carboxy, Sulfo oder Halogen substituiert sein kann; oder um N-C₁-C₄-Alkyl-N-phenylamino, wobei das Alkyl und Phenyl gegebenenfalls wie zuvor geschildert substituiert sein kann, handeln.

Beispiele für geeignete nicht-reaktive Aminoreste V sind Amino, Methylamino, Ethylamino, β-Hydroxyethylamino, N,N-Di-β-Hydroxyethylamino, β-Sulfoethylamino, Cyclohexylamino, o-, m- oder p-Methylphenylamino, o-, m- oder p-Methoxyphenylamino, o-, m- oder p-Sulfophenylamino, 2,4- oder 2,5-Disulfophenylamino, o-Carboxyphenylamino, 1- oder 2-Naphthylamino, 3,6,8-Trisulfonaphthylamino, 1,6-Disulfonaphthylamino, N-Ethyl-N-phenylamino, N-Methyl-N-phenylamino, N-β-sulfoethyl-N-phenylamino, oder N-β-Hydroxyethyl-N-phenylamino.

V steht als nicht-reaktiver Aminorest bevorzugt für Amino, unsubstituiertes oder durch Hydroxy, Sulfo oder Sulfato substituiertes N-Mono- oder N,N-Di-C₁-C₂-CrAlkylamino, Cyclohexylamino, unsubstituiertes oder durch Methyl, Methoxy, Carboxy oder Sulfo substituiertes Phenylamino oder Naphthylamino oder für N-C₁-C₂-Alkyl-N-phenylamino und besonders bevorzugt für Amino, unsubstituiertes oder durch Hydroxy, Sulfo oder Sulfato substituiertes N-C₁-C₂-Alkylamino oder für Mono- oder Disulfophenylamino.

Bevorzugt als nicht-reaktive C₁-C₄-Alkoxyreste V sind Methoxy und iso-Propoxy und als nicht-reaktive C₁-C₄-Alkylthioreste V Methylthio und Ethylthio.

Eine Gruppe von bevorzugten nicht-reaktiven Resten V umfasst Hydroxy, C₁-C₄-Alkoxy, Morpholino, Amino; unsubstituiertes oder im Alkylteil durch Sulfo, Sulfato, Hydroxy, Carboxy oder Phenyl substituiertes N-C₁-C₄-Alkylamino oder N,N-Di-C₁-C₄-Alkylamino, Cyciohexylamino; unsubstituiertes oder im Phenyl- oder Naphthylteil durch C₁-C₄-Alkyl, C₁-C₄-Alkoxy, Amino, C₂-C₄-Alkanoylamino, Carboxy, Sulfo oder Halogen substituiertes Phenylamino oder Naphthylamino, und unsubstituiertes oder im Alkylteil durch Sulfo, Sulfato, Hydroxy, Carboxy oder Phenyl substituiertes und/oder im Phenylteil durch C₁-C₄-Alkyl, C₁-C₄-Alkoxy, Amino, C₂-C₄-Alkanoylamino, Carboxy, Sulfo oder Halogen substituiertes N-C₁-C₄-Alkyl-N-phenylamino.

Eine Gruppe von besonders bevorzugten nicht-reaktiven Resten V umfasst Hydroxy, Methoxy, iso-Propoxy, Morpholino, Amino, unsubstituiertes oder durch Hydroxy, Sulfo oder Sulfato substituiertes N-Mono- oder N,N-Di-C₁-C₂-Alkylamino, Cyclohexylamino, unsubstituiertes oder durch Methyl, Methoxy, Carboxy oder Sulfo substituiertes Phenylamino oder Naphthylamino und N-C₁-C₂-Alkyl-N-phenylamino.

Handelt es sich bei V um einen Reaktivrest der Formel (4a) - (4g), so bedeuten alk und alk' unabhängig voneinander je z.B. Methylen, 1,2-Ethylen, 1,3-Propylen, 1,4-Butylen, 1,5-Pentylen, 1,6-Hexylen oder deren verzweigte Isomere. alk und alk' stehen unabhängig voneinander je bevorzugt für einen C₁-C₄-Alkylenrest und besonders bevorzugt für einen Ethylen- oder Propylenrest.

Bevorzugte Bedeutungen von arylen sind ein unsubstituierter oder durch Sulfo, Methyl, Methoxy oder Carboxy substituierter 1,3- oder 1,4-Phenylenrest und insbesondere ein unsubstituierter 1,3- oder 1,4-Phenylenrest.

R₄ bedeutet bevorzugt um Wasserstoff.

R₅ bedeutet bevorzugt Wasserstoff, C₁-C₄-Alkyl oder einen Rest der Formel 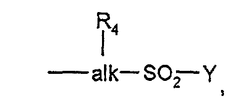 worin für R₄, Y und alk jeweils die zuvor genannten Bedeutungen und Bevorzugungen gelten. R₅ bedeutet besonders bevorzugt Wasserstoff, Methyl oder Ethyl.

R₆ bedeutet bevorzugt Wasserstoff, Methyl oder Ethyl und besonders bevorzugt Wasserstoff.

Die Variable B steht bevorzugt für -NH- oder -O- und besonders bevorzugt für -O-.

Die Variable t steht bevorzugt für die Zahl 0.

Bevorzugt als Reaktivreste der Formel (4a) bis (4g) sind solche, worin R₄, R₅ und R₆ je Wasserstoff, B den Rest -NH- oder -O-, alk und alk' unabhängig voneinander je Ethylen oder Propylen, arylen unsubstituiertes oder durch Methyl, Methoxy, Carboxy oder Sulfo substituiertes Phenylen, Y Vinyl oder β-Sulfatoethyl, Y₁-CHBr-CH₂Br oder -CBr=CH₂ und t die Zahl 0 bedeuten.

V steht als Reaktivrest besonders bevorzugt für eine Gruppe der Formel 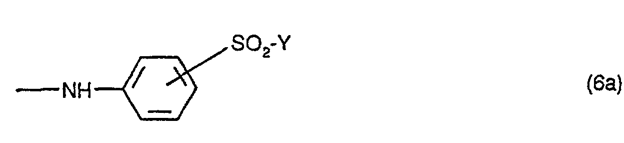 oder 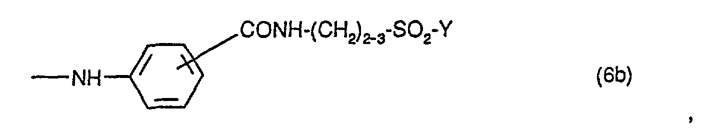 worin für Y die zuvor genannten Bedeutungen und Bevorzugungen gelten.

In der Formel (2) gelten für Z₁ unabhängig die zuvor für Z angegebenen Bedeutungen und Bevorzugungen, für T₁ unabhängig die zuvor für T angegebenen Bedeutungen und Bevorzugungen und für V₁ unabhängig die zuvor für V angegebenen Bedeutungen und Bevorzugungen.

R₁ steht bevorzugt für Methyl, R₂ bevorzugt für Ethyl, und R₃ bevorzugt für Carbamoyl oder Sulfomethyl.

Eine bevorzugte Ausführungsform der vorliegenden Erfindung betrifft Farbstoffgemische enthaltend
(a) eine Verbindung der zuvor angegebenen Formel (1), worin
   K₁ einen 1- oder 2-Naphthylrest, der durch 1 bis 4 gleiche oder verschiedene Reste aus der Gruppe Hydroxy, Amino, N-Methyl- oder N-Ethylamino, Acetylamino, Benzoylamino und Sulfo weitersubstituiert ist, bedeutet,
   Z für einen Phenylrest, der einen faserreaktiven Rest der Formel

      - SO₂ - Y (3a)

      oder

      - CONH - (CH₂)ₘ - SO₂ - Y (3b),

      worin Y Vinyl oder β-Sulfatoethyl und m die Zahl 2 oder 3 sind, trägt und weiter unsubstituiert oder durch Sulfo, Methyl, Methoxy, Chlor, Hydroxy oder Methoxy substituiert ist, oder für einen 1- oder 2-Naphthylrest, der einen faserreaktiven Rest der oben angegebenen Formel (3a) trägt und weiter unsubstituiert oder durch Sulfo substituiert ist, steht,
   T Fluor oder Chlor ist, und
   V, Hydroxy, C₁-C₄-Alkoxy, Morpholino, Amino; unsubstituiertes oder im Alkylteil durch Sulfo, Sulfato, Hydroxy, Carboxy oder Phenyl substituiertes N-C₁-C₄-Alkylamino oder N,N-Di-C₁-C₄-Alkylamino, Cyclohexylamino; unsubstituiertes oder im Phenyl- oder Naphthylteil durch C₁-C₄-Alkyl, C₁-C₄-Alkoxy, Amino, C₂-C₄-Alkanoylamino, Carboxy, Sulfo oder Halogen substituiertes Phenylamino oder Naphthylamino oder unsubstituiertes oder im Alkylteil durch Sulfo, Sulfato, Hydroxy, Carboxy oder Phenyl substituiertes und/oder im Phenylteil durch C₁-C₄-Alkyl, C₁-C₄-Alkoxy, Amino, C₂-C₄-Alkanoylamino, Carboxy, Sulfo oder Halogen substituiertes N-C₁-C₄-Alkyl-N-phenylamino bedeutet, und
(b) eine Verbindung der zuvor angegebenen Formel (2), worin
   R₁ und R₂ unabhängig voneinander je C₁-C₄-Alkyl sind,
   R₃ für Carbamoyl oder Sulfomethyl steht, und
   T₁ unabhängig die oben für T angegebene Bedeutung, V ₁ unabhängig die oben für V angegebene Bedeutung und Z₁ unabhängig die oben für Z angegebene Bedeutung haben.

Eine besonders bevorzugte Ausführungsform der vorliegenden Erfindung betrifft Farbstoffgemische enthaltend
(a) eine Verbindung der zuvor angegebenen Formel (1), worin
   K₁ einen 1-Naphthylrest, der durch 1 bis 4 gleiche oder verschiedene Reste aus der Gruppe Hydroxy, Amino und Sulfo weitersubstituiert ist, bedeutet,
   Z ein faserreaktiver Rest der Formel 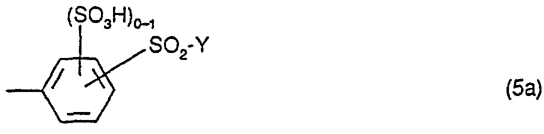 oder 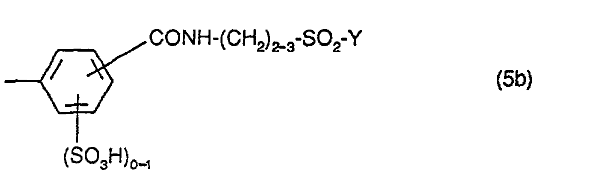 ist und Y Vinyl oder β-Sulfatoethyl bedeutet,
   T Fluor oder Chlor ist, und
   V für Amino, unsubstituiertes oder durch Hydroxy, Sulfo oder Sulfato substituiertes N-C ₁-C₂-Alkylamino oder für Mono- oder Disulfophenylamino steht, und
(b) eine Verbindung der zuvor angegebenen Formel (2), worin
   R₁ Methyl, R₂ Ethyl und R₃ Carbamoyl oder Sulfomethyl bedeuten, und
   T₁ unabhängig die oben für T angegebene Bedeutung, V ₁ unabhängig die oben für V angegebene Bedeutung und Z₁ unabhängig die oben für Z angegebene Bedeutung haben.

Eine insbesondere bevorzugte Ausführungsform der vorliegenden Erfindung betrifft Farbstoffgemische enthaltend
(a) eine Verbindung der Formel 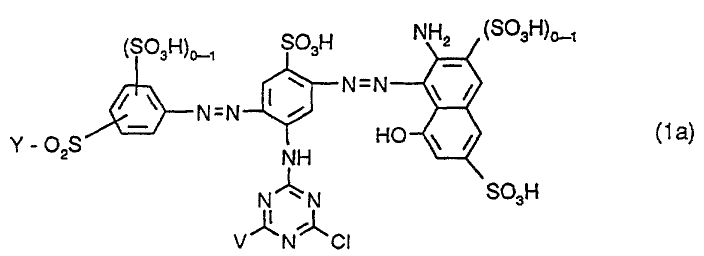 und
(b) eine Verbindung der Formel 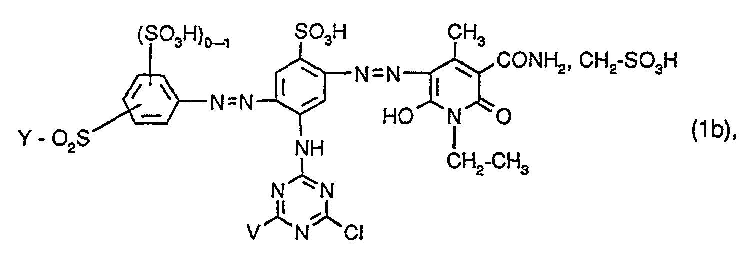
worin Y Vinyl oder β-Sulfatoethyl ist und V für Amino, unsubstituiertes oder durch Hydroxy, Sulfo oder Sulfato substituiertes N-C₁-C₂-Alkylamino oder für Mono- oder Disulfophenylamino steht.

Die Verbindungen der Formeln (1) und (2) sind z.T. aus der EP-A-647683 bekannt oder können analog dazu hergestellt werden.

Die Synthese der Verbindungen der Formeln (1) und (2) kann z.B. erfolgen, indem man eine Verbindung der Formel 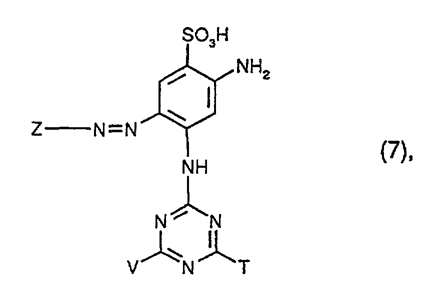 worin V, T und Z jeweils die zuvor angegebene Bedeutung haben, in an sich bekannter Weise, z.B. mit Natriumnitrit in einem salzsauren Medium, diazotiert und mit einer Kupplungskomponente der Formel 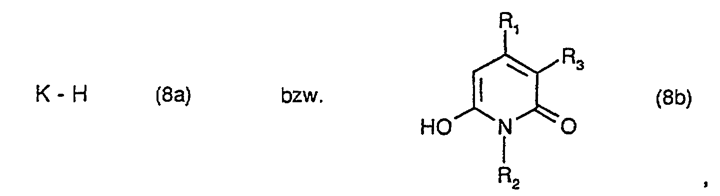 worin K, R₁, R₂ und R₃ jeweils die zuvor angegebene Bedeutung haben, kuppelt Bei der Herstellung der Verbindungen der Formel (2), worin R₃ Sulfomethyl bedeutet, kann es sich als vorteilhaft erweisen, anstelle der Kupplungskomponente der Formel (8b) eine Kupplungskomponente der Formel 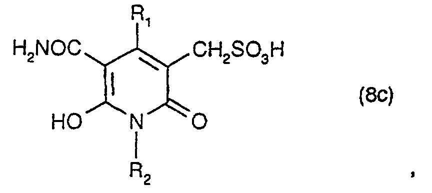 worin R₁ und R₂ jeweils die zuvor angegebene Bedeutung haben, in das Verfahren einzusetzen.

Die Verbindungen der Formel (7) können z.B. durch Diazotierung einer Verbindung der Formel Z-NH₂ und Kupplung auf eine Verbindung der Formel 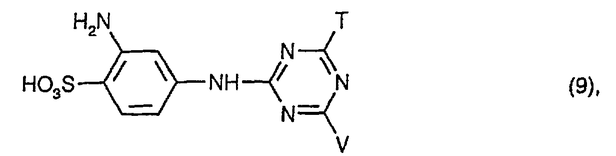 worin T, V und Z jeweils die zuvor angegebene Bedeutung haben, hergestellt werden.

Die erfindungsgemäss verwendeten Farbstoffe der Formeln (1) und (2) weisen jeweils mindestens eine Sulfogruppe und vorzugsweise jeweils 1 bis 3 Sulfogruppen auf, welche jeweils entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz, vorliegen. Die Farbstoffe der Formeln (1) und (2) und somit auch die Farbstoffgemische enthalten in der Regel weitere Zusätze, z.B. Kochsalz oder Dextrin.

Die Farbstoffe der Formeln (1) und (2) liegen in dem Farbstoffgemisch z.B. im Gewichtsverhältnis von 25:1 bis 1:1, vorzugsweise 20:1 bis 1:1 und besonders bevorzugt 10:1 bis 1,5:1, vor.

Die erfindungsgemässen Farbstoffgemische können z.B. durch Mischung der Einzelfarbstoffe hergestellt werden. Dieser Mischprozess erfolgt z.B. in geeigneten Mühlen, z.B. Kugel- oder Stiftmühlen, sowie in Knetern oder Mixem.

Farbstoffgemischen enthaltend jeweils eine Verbindung der Formel (1) und (2), worin T und T₁, V und V₁ und Z und Z₁ jeweils identisch sind, können vorteilhaft auch durch Mischsynthese, d.h. durch Umsetzung einer Verbindung der zuvor angegebenen Formel (7) mit einem Gemisch von Kupplungskomponenten der zuvor angegebenen Formeln (8a) und (8b) bzw. (8c) erhalten werden.

Ein weiterer Gegenstand der Erfindung betrifft ein Verfahren zum Färben oder Bedrucken von hydroxylgruppenhaltigen oder stickstoffhaltigen Fasermaterialien mit den erfindungsgemässen Farbstoffgemischen.

Als Fasermaterialien kommen z.B. die natürlichen Cellulosefasem, wie Baumwolle, Leinen, Jute oder Hanf, sowie modifizierte Cellulosefasern wie Zellstoff oder regenerierte Cellulose in Frage. Insbesondere eignen sich die erfindungsgemässen Farbstoffgemische zum Färben oder Bedrucken von natürlichen Polyamidfasermaterialien, z.B. Seide oder Wolle, synthetischen Polyamidfasermaterialien, z.B. Polyamid 6 oder Polyamid 6.6, oder von Woll- und synthetischen Polyamidmischgeweben. Die erfindungsgemässen Farbstoffgemische sind besonders geeignet zum Färben oder Bedrucken von natürlichen Polyamidfasermaterialien und hierbei insbesondere von Wolle oder von chlorierter oder waschmaschinenfest ausgerüsteter Wolle.

Das genannte Textilfasermaterial kann dabei in den verschiedensten Verarbeitungsformen vorliegen, wie z.B. als Faser, Garn, Flocke, Gewebe oder Gewirke.

Die erfindungsgemässen Farbstoffgemische eignen sich für die üblichen Färbe- und Druckverfahren und lassen sich auf verschiedenste Weise auf das Fasermaterial applizieren und fixieren, insbesondere in Form von wässrigen Farbstofflösungen oder-druckpasten. Sie eignen sich sowohl für das Ausziehverfahren als auch zum Foulard-Färben, wonach die Ware mit wässrigen, gegebenenfalls salzhaltigen Farbstofflösungen imprägniert wird, und die Farbstoffe nach einer Alkalibehandlung oder in Gegenwart von Alkali, gegebenenfalls unter Wärmeeinwirkung, fixiert werden. Die erfindungsgemässen Farbstoffgemische sind ebenfalls für das sogenannte Kaltverweilverfahren geeignet, wonach der Farbstoff zusammen mit dem Alkali auf dem Foulard aufgebracht wird und danach durch mehrstündiges Lagern bei Raumtemperatur fixiert wird.

Das Färben von natürlichen und synthetischen Polyamidfasermaterialien, insbesondere von Wolle, erfolgt vorzugsweise nach dem Ausziehverfahren, bei einem pH-Wert von ca. 3 bis 7, insbesondere 3 bis 5, und bei Temperaturen von z.B. 70 bis 120 °C und insbesondere 90 bis 105°C.

Die Färbeflotten oder Druckpasten können ausser Wasser und den Farbstoffen der Formeln (1) und (2) weitere Zusätze, z.B. an sich bekannte Nuancierfarbstoffe, Salze, Puffersubstanzen, Netzmittel, Antischaummittel, Egalisiermittel oder die Eigenschaften des Textilmaterials beeinflussende Mittel, z.B. Weichmachungsmittel, Zusätze zum Flammfestausrüsten oder schmutz-, wasser- und öl-abweisende Mittel sowie wasserenthärtende Mittel und natürliche oder synthetische Verdicker, z.B. Alginate oder Celluloseether, enthalten.

Als vorteilhaft haben sich z.B. Farbstoffgemische enthaltend 90 bis 25 Gew.-% und vorzugsweise 90 bis 50 Gew.-% Farbstoffmischung enthaltend je eine Verbindung der zuvor angegebenen Formeln (1) und (2) und 10-75 Gew.-% und vorzugsweise 10 bis 50 Gew.-%, jeweils bezogen auf die gesamte feste Farbstofformulierung, eines Farbstoffes der Formel 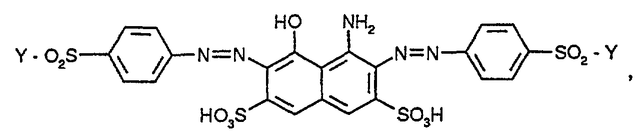 worin für Y die zuvor angegebenen Bedeutungen und Bevorzugungen gelten, erwiesen.

Die erfindungsgemässen Farbstoffgemische ergeben egale Färbungen und Drucke mit guten Allgemeinechtheiten, insbesondere guter Wasch-, Reib-, Nass-, Nassreib- und Lichtechtheit. Die erfindungsgemässen Farbstoffgemische zeichnen sich ferner durch gleichmässigen Farbaufbau, gutes Aufziehverhalten und hohe Fixiergrade aus. Weiterhin kann bei den erfindungsgemässen Farbstoffgemischen auf die sonst übliche Nachbehandlung der Färbungen und Drucke mit sogenannten Fixiermitteln verzichtet werden.

In den folgenden Beispielen stehen Teile für Gewichtsteile. Die Temperaturen sind Celsiusgrade. Die Beziehung zwischen Gewichtsteilen und Volumenteilen ist dieselbe wie diejenige zwischen Gramm und Kubikzentimeter.

### Beispiel 1: 10 g Wollgewebe werden in einem Laborfärbeapparat mit folgender Flotte gefärbt:

0,2g Natriumacetat
0,5g 80%-ige Essigsäure
0,2g eines handelsüblichen Egalisiermittels (Albegal B®)
0,3 g eines Farbstoffgemisches, bestehend aus 80 Gew.-% Farbstoff der Formel 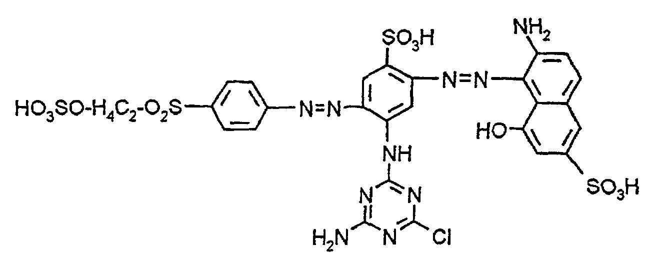 und 20 Gew.-% Farbstoff der Formel 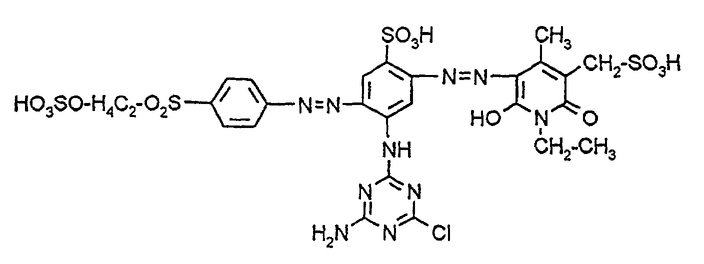 und 200 ml Wasser.

Der pH der Flotte beträgt 4,5. Das Textil wird in der Färbeflotte 5 min bei 40°C behandelt, anschliessend mit einer Aufheizrate von 1°/min auf Kochtemperatur (98°C) erwärmt und 90 min bei dieser Temperatur gefärbt. Nach dem Abkühlen der Flotte auf 80°C wird die Färbung wie üblich gespült und fertiggestellt. Man erhält eine faser- und flächenegale schwarze Färbung mit guten Echtheitseigenschaften.

### Beispiel 2: 10g eines nach dem Hercoset-Verfahren auf Superwashstandard ausgerüstetes Wolltricot wird in einem Laborfärbeapparat mit folgender Flotte gefärbt:

0,2g Natriumacetat
0,5g 80%-ige Essigsäure
0,5g Glaubersalz
0,2g eines handelsüblichen Egalisiermittels (Albegal B®)
0,4 g eines Farbstoffgemisches bestehend aus 75 Gew.-% Farbstoff der Formel 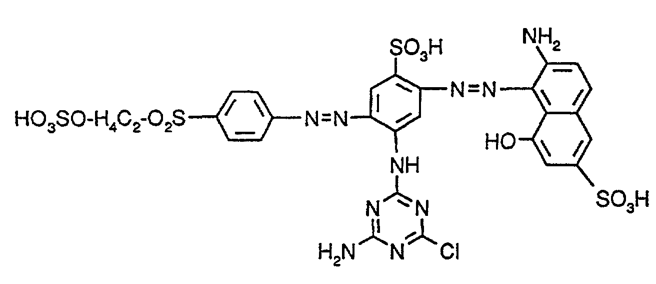 und 25 Gew.-% Farbstoff der Formel 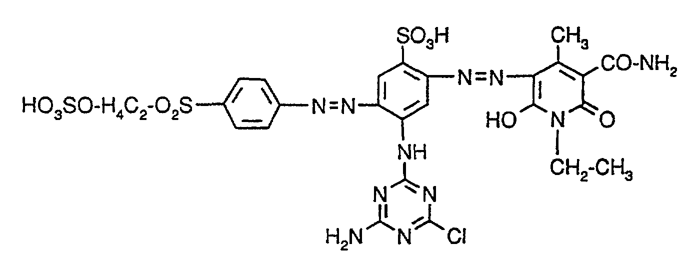 und 200 ml Wasser.

Der pH der Flotte beträgt 4,7. Das Textilmaterial wird in der Färbeflotte 5 min bei 40 °C behandelt, dann mit einer Aufheizrate von 1 °/min auf 60°C erwärmt und 20 min bei 60°C gehalten. Anschliessend wird mit 1°/min auf Kochtemperatur (98°C) erwärmt und 90 min bei dieser Temperatur gefärbt. Nach dem Abkühlen wird das Textilmaterial in einer frischen 5 g/l Natriumhydrogencarbonat enthaltenden Flotte 20 min bei 80 °C und pH 8,3 behandelt. Dann wird wie üblich gespült und dem letzten Spülbad zum Absäuern 1% Ameisensäure, bezogen auf das Fasergewicht, zugesetzt. Man erhält eine faser- und flächenegale schwarze Färbung mit guten Echtheitseigenschaften.

### Beispiel 3: 5g lose Wolle werden in einem Laborfärbeapparat mit folgender Flotte gefärbt:

0,2g Natriumacetat
0,5g 80%-ige Essigsäure
0,2g eines handelsüblichen Egalisiermittels (Albegal B® )
105 mg eines Farbstoffgemisches, bestehend aus 75 Teilen Farbstoff der Formel 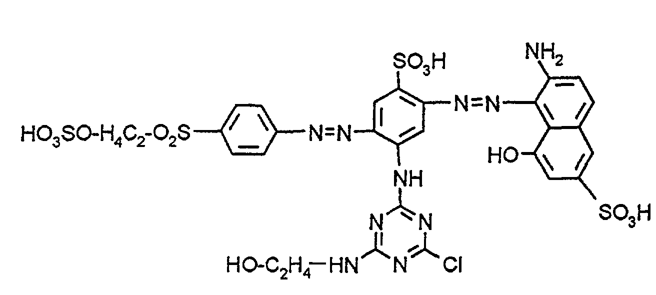 und 25 Teilen Farbstoff der Formel 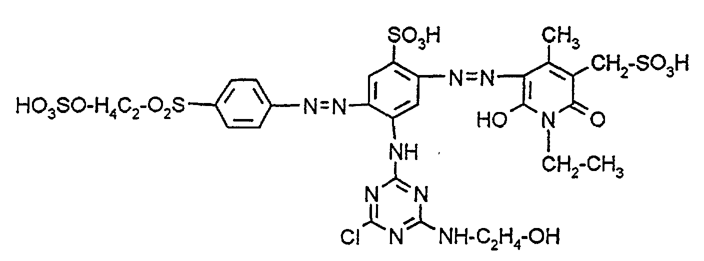 und 400 ml Wasser.

Der pH der Flotte beträgt 4,7. Das Material wird in der Färbeflotte 5 min bei 40°C behandelt, anschliessend mit einer Aufheizrate von 1°C/min auf Kochtemperatur (98°C) erwärmt und 90 min bei dieser Temperatur gefärbt. Nach Abkühlen der Flotte auf 80°C wird die Färbung wie üblich gespült und fertiggestellt. Man erhält eine faser- und flächenegale schwarze Färbung mit guten Echtheitseigenschaften.

### Beispiel 4: 1 kg Wollkammgam in Form einer Kreuzspule wird in einem Zirkulationsapparat mit einer Flotte bestehend aus

9 l Wasser,
9 g Ammoniumacetat,
37 ml 80%-ige Essigsäure,
9 g eines nichtionogenen Netzmittels (Albegal FFA® ), und
20 g eines handelsüblichen Egalisiermittels (Albegal B® ),
10 min bei 40°C vorbehandelt. Der pH der Flotte beträgt 4,65. Nach Zugabe einer Lösung, die 24 g des Farbstoffs der Formel 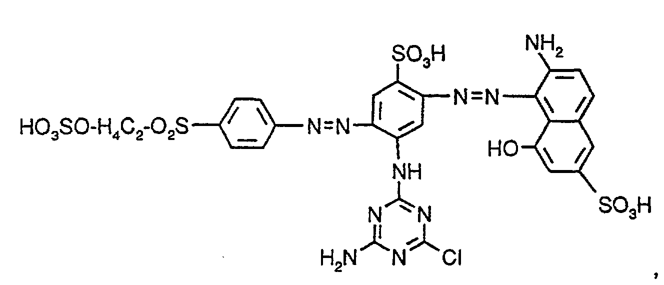 6g des Farbstoffs der Formel 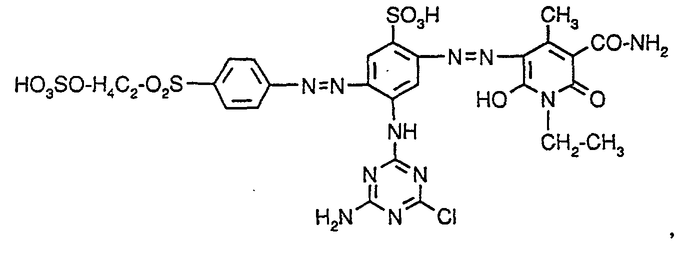 und 1g des Farbstoffs der Formel 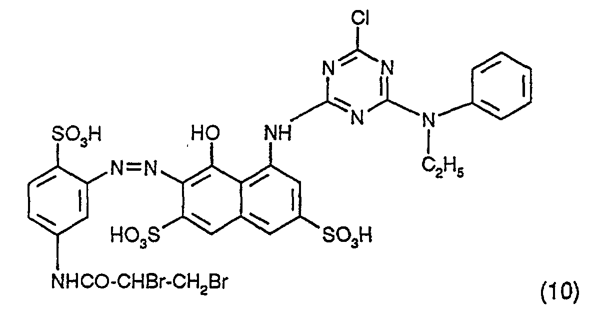 enthält, wird in der Färbeflotte 5 min bei 40 °C behandelt und dann mit einer Aufheizrate von 1°C/min auf 70°C erwärmt und 15 min bei 70°C gehalten. Anschliessend wird mit 1°/min auf Kochtemperatur (98°C) erwärmt und 90 min bei dieser Temperatur gefärbt. Nach dem Abkühlen wird das Textilmaterial in einer frischen mit 35 g 35%igem Ammoniak auf pH 8,5 gestellten Flotte 20 min bei 80 °C behandelt. Dann wird wie üblich gespült und dem letzten Spülbad zum Absäuern 1% Ameisensäure, bezogen auf das Fasergewicht, zugesetzt. Man erhält eine faser- und flächenegale schwarze Färbung mit guten Echtheitseigenschaften.

### Beispiel 5: Verfährt man wie im Beispiel 4 beschrieben, setzt der Färbeflotte aber zusätzlich 4 Gew.-%, bezogen auf das Textilmaterial, eines handelsüblichen Wollschutzmittels (Irgasol HTW®) zu, färbt bei 105°C und verkürzt die Färbezeit auf 45 min, wird ebenfalls eine faser- und flächenegale schwarze Färbung mit guten Echtheitseigenschaften erhalten.

### Beispiel 6: Verfährt man wie im Beispiel 1 angegeben und verwendet als Farbstoff 500 mg eines Gemisches aus 85 Teilen Farbstoff mit Formel

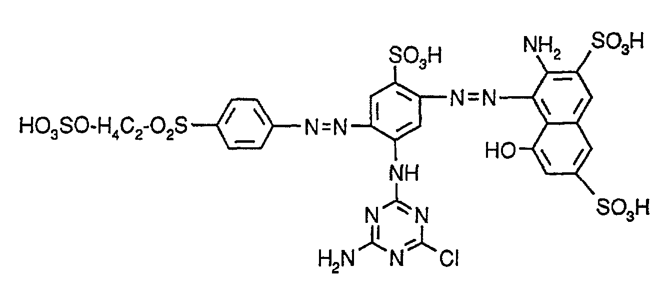

und 15 Teilen Farbstoff der Formel 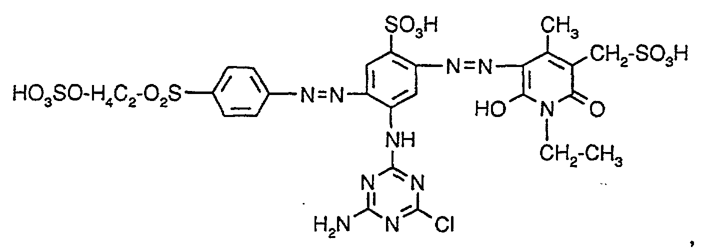 wird ebenfalls eine faser- und flächenegale schwarze Färbung mit guten Echtheitseigenschaften erhalten.

### Beispiel 7: Verfährt man wie im Beispiel 1 angegeben und verwendet als Farbstoff 350 mg eines Gemisches aus 65 Teilen Farbstoff der Formel

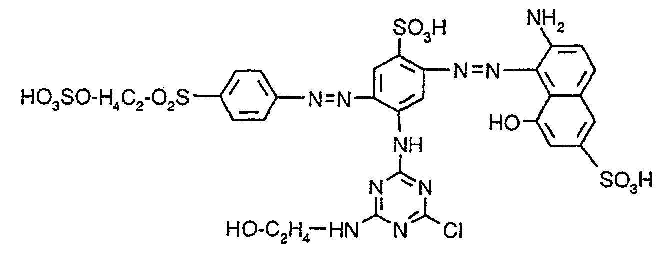

und 35 Teilen Farbstoff der Formel 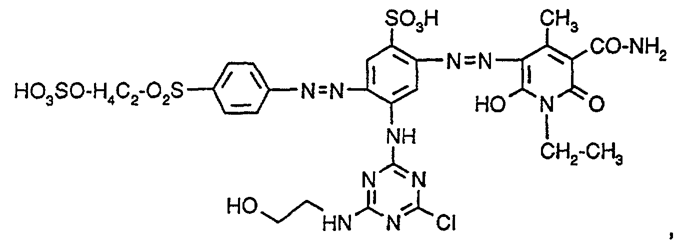 wird ebenfalls eine faser- und flächenegale schwarze Färbung mit guten Echtheitseigenschaften erhalten.

### Beispiel 8: Verfährt man wie im Beispiel 1 angegeben und verwendet als Farbstoff 400 mg eines Gemisches aus 70 Teilen Farbstoff der Formel

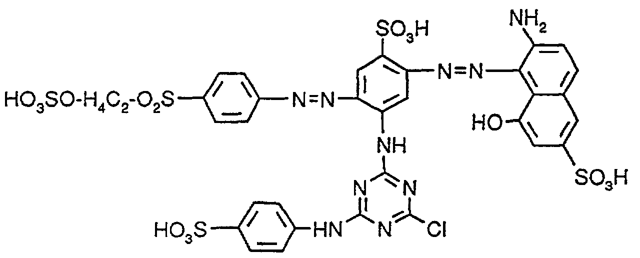

und 30 Teilen Farbstoff der Formel 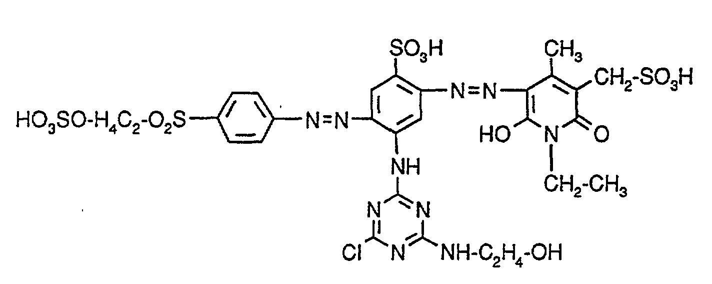 wird ebenfalls eine faser- und flächenegale schwarze Färbung mit guten Echtheitseigenschaften erhalten.

### Beispiel 9: Verfährt man wie im Beispiel 4 beschrieben und verwendet anstelle des Nuancierfarbstoffes der Formel (10) 1,25 g des Farbstoffes der Formel

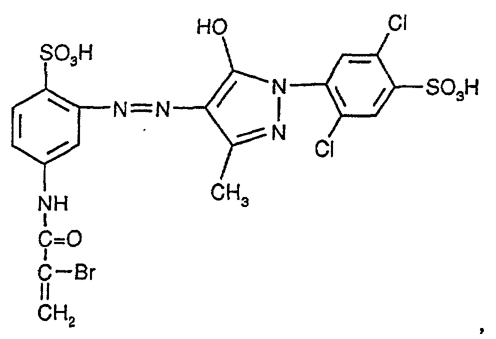

wird ebenfalls eine faser- und flächenegale schwarze Färbung mit guten Echtheitseigenschaften erhalten.

### Beispiel 10: 10g eines nach dem Hercoset-Verfahren auf Superwashstandard ausgerüstetes Wolltricot wird in einem Laborfärbeapparat mit folgender Flotte gefärbt:

0,2g Natriumacetat
0,5g 80%-ige Essigsäure
0,5g Glaubersalz
0,2g eines handelsüblichen Egalisiermittels (Albegal B® )
0,4 g eines Farbstoffgemisches bestehend aus
   45 Gew.-% Farbstoff der Formel 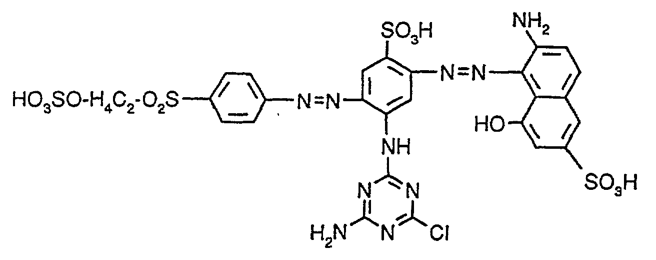
   15 Gew.-% Farbstoff der Formel 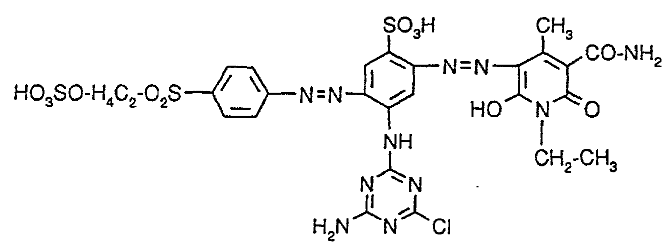
   und 40 Gew.-% Farbstoff der Formel 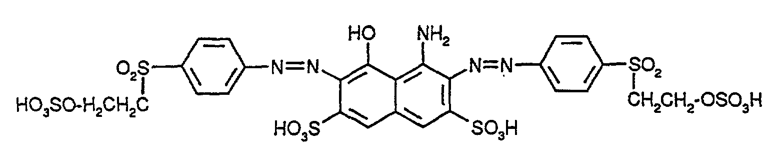
und 200 ml Wasser.

Der pH der Flotte beträgt 4,7. Das Textilmaterial wird in der Färbeflotte 5 min bei 40 °C behandelt, dann mit einer Aufheizrate von 1 °/min auf 60°C erwärmt und 20 min bei 60°C gehalten. Anschliessend wird mit 1 °/min auf Kochtemperatur (98°C) erwärmt und 90 min bei dieser Temperatur gefärbt. Nach dem Abkühlen wird das Textilmaterial in einer frischen 5 g/l Natriumhydrogencarbonat enthaltenden Flotte 20 min bei 80 °C und pH 8,3 behandelt (Die Behandlung kann alternativ mit Ammoniak, Soda oder Natriumhydroxidlösung jeweils bei einem pH-Wert von 7,5 bis 9 erfolgen). Dann wird wie üblich gespült und dem letzten Spülbad zum Absäuern 1% Ameisensäure, bezogen auf das Fasergewicht, zugesetzt. Man erhält eine faser- und flächenegale schwarze Färbung mit guten Echtheitseigenschaften.

## Patentansprüche

1. Farbstoffgemische enthaltend
(a) eine Verbindung der Formel 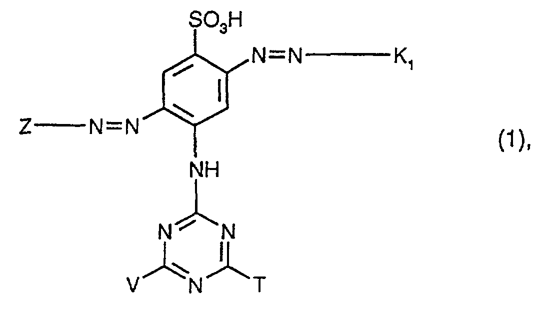 worin
K₁ ein unsubstituierter oder durch Hydroxy, Amino, N-C₁-C₄-Alkylamino, C₂-C₄-Alkanoylamino, Benzoylamino, Sulfo oder einen Rest der Formel -SO₂-Y weitersubstituierter Naphthylrest ist,
Z den Rest einer Diazokomponente der Benzol- oder Naphthalinreihe bedeutet, welche mindestens einen faserreaktiven Rest der Formel
- SO₂ - Y (3a),
- CONH - (CH₂)ₘ - SO₂ - Y (3b),
- CONH - (CH₂)ₘ₁ - O - (CH₂)ₘ - SO₂ - Y (3c),
- (O)ₚ - (CH₂)_{q} - CONH - (CH₂)ₘ - SO₂ - Y (3d),
- NH - CO - CHX - CH₂X (3e)
oder
- NH - CO - CX = CH₂ (3f)
aufweist,
Y Vinyl oder einen Rest -CH₂-CH₂-U bedeutet und U eine Abgangsgruppe ist,
X für Chlor oder Brom steht,
p die Zahl 0 oder 1 und m, m1 und q unabhängig voneinander je eine ganze Zahl von 1 bis 6 bedeuten,
T für Chlor, Fluor, Brom, 3-Carboxypyridin-1-yl oder 3-Carbamoylpyridin-1-yl steht,
V unabhängig die Bedeutung von T hat oder für einen nicht-reaktiven Rest aus der Gruppe Hydroxy, C₁-C₄-Alkoxy, Phenoxy, C₁-C₄-Alkylthio, Morpholino und gegebenenfalls substituiertes Amino oder für einen Reaktivrest der Formel 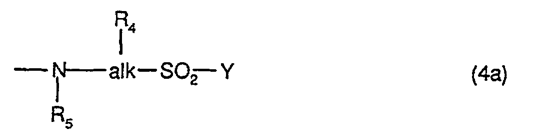 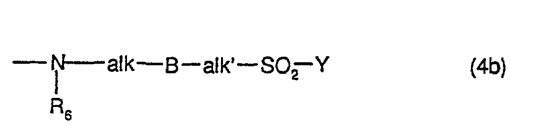 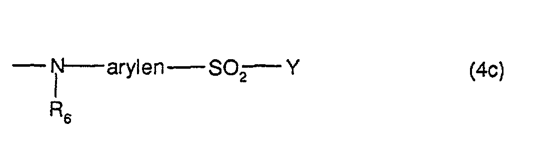 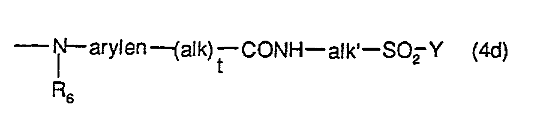 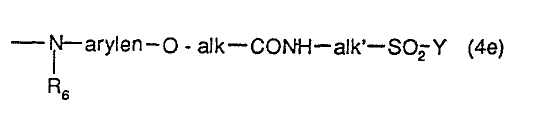 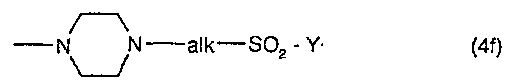 oder 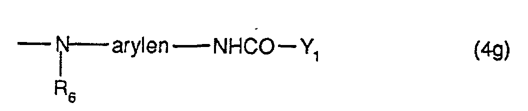 steht,
R₄ Wasserstoff, Hydroxy, Sulfo, Sulfato, Carboxy, Cyano, Halogen, C ₁-C₄-Alkoxycarbonyl, Carbamoyl oder eine Gruppe -SO₂-Y, worin Y die zuvor angegebene Bedeutung hat, ist,
R₅ Wasserstoff, gegebenenfalls durch Hydroxy, Sulfo, Sulfato, Carboxy oder Cyano substituiertes C₁-C₄-Alkyl oder ein Rest 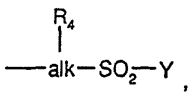 worin R₄ und Y jeweils die zuvor angegebene Bedeutung haben, ist,
R₆ für Wasserstoff oder C₁-C₄-Alkyl steht,
alk und alk' unabhängig voneinander je C₁-C₆-Alkylen sind,
arylen einen unsubstituierten oder durch Sulfo, Carboxy, Hydroxy, C₁-C₄-Alkyl, C₁-C₄-Alkoxy oder Halogen substituierten Phenylen- oder Naphthylenrest bedeutet,
Y₁ für eine Gruppe -CHX-CH₂X oder -CX=CH₂ steht, worin X die oben angegebene Bedeutung hat,
B ein Rest -O- oder-NR₆-, worin R₆ die oben angegebene Bedeutung hat, ist, und
t für die Zahl 0 oder 1 steht, und
(b) eine Verbindung der Formel 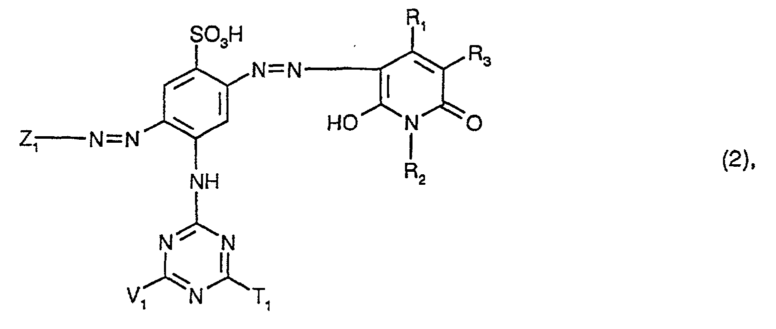 worin
R₁ und R₂ unabhängig voneinander je C₁-C₄-Alkyl sind,
R₃ Carbamoyl, Sulfomethyl oder Cyano bedeutet, und
T₁ unabhängig die zuvor für T angegebene Bedeutung, V ₁ unabhängig die zuvor für V angegebene Bedeutung und Z ₁ unabhängig die zuvor für Z angegebene Bedeutung haben.

2. Farbstoffgemische gemäss Anspruch 1, dadurch gekennzeichnet, dass K₁ in Formel (1) einen 1- oder 2-Naphthylrest, der durch 1 bis 4 gleiche oder verschiedene Reste aus der Gruppe Hydroxy, Amino, N-Methyl- oder N-Ethylamino, Acetylamino, Benzoylamino und Sulfo weitersubstituiert ist, bedeutet.

3. Farbstoffgemische gemäss Anspruch 1 oder 2, dadurch gekennzeichnet, dass K₁ für einen 1-Naphthylrest, der 1 bis 4 gleiche oder verschiedene Reste aus der Gruppe Hydroxy, Amino und Sulfo trägt, steht.

4. Farbstoffgemische gemäss einem der Ansprüche 1 bis 3, dadurch gekennzeichnet, dass Z und Z₁ unabhängig voneinander je einen Phenylrest, der einen faserreaktiven Rest der im Anspruch 1 angegebenen Formel (3a) oder (3b) trägt und weiter unsubstituiert oder durch Sulfo, Methyl, Methoxy, Chlor, Hydroxy oder Methoxy substituiert ist, oder einen 1- oder 2-Naphthylrest, der einen faserreaktiven Rest der im Anspruch 1 angegebenen Formel (3a) trägt und weiter unsubstituiert oder durch Sulfo substituiert ist, bedeuten.

5. Farbstoffgemische gemäss einem der Ansprüche 1 bis 4, dadurch gekennzeichnet, dass Z und Z₁ unabhängig voneinander je einen faserreaktiven Rest der Formel 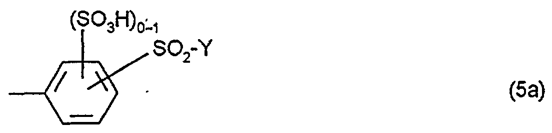 oder 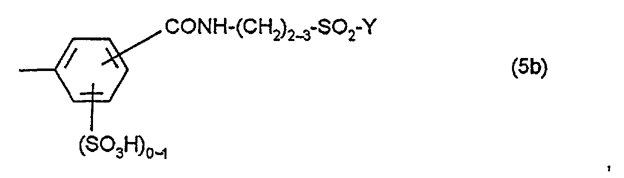 worin Y Vinyl oder β-Sulfatoethyl ist, bedeuten.

6. Farbstoffgemische gemäss einem der Ansprüche 1 bis 5, dadurch gekennzeichnet, dass T und T₁ unabhängig voneinander je Fluor oder Chlor und vorzugsweise je Chlor bedeuten.

7. Farbstoffgemische gemäss einem der Ansprüche 1 bis 6, dadurch gekennzeichnet, dass V und V₁ unabhängig voneinander je Hydroxy, C₁-C₄-Alkoxy, Morpholino, Amino; unsubstituiertes oder im Alkylteil durch Sulfo, Sulfato, Hydroxy, Carboxy oder Phenyl substituiertes N-C₁-C₄-Alkylamino oder N,N-Di-C₁-C₄-Alkylamino, Cyclohexylamino; unsubstituiertes oder im Phenyl- oder Naphthylteil durch C₁-C₄-Alkyl, C₁-C₄-Alkoxy, Amino, C₂-C₄-Alkanoylamino, Carboxy, Sulfo oder Halogen substituiertes Phenylamino oder Naphthylamino, oder unsubstituiertes oder im Alkylteil durch Sulfo, Sulfato, Hydroxy, Carboxy oder Phenyl substituiertes und/oder im Phenylteil durch C₁-C₄-Alkyl, C₁-C₄-Alkoxy, Amino, C₂-C₄-Alkanoylamino, Carboxy, Sulfo oder Halogen substituiertes N-C₁-C₄-Alkyl-N-phenylamino bedeuten.

8. Farbstoffgemische gemäss einem der Ansprüche 1 bis 7, dadurch gekennzeichnet, dass V und V₁ unabhängig voneinander je Amino, unsubstituiertes oder durch Hydroxy, Sulfo oder Sulfato substituiertes N-C₁-C₂-Alkylamino oder Mono- oder Disulfophenylamino bedeuten.

9. Farbstoffgemische gemäss Anspruch 1, dadurch gekennzeichnet, dass sie
(a) eine Verbindung der im Anspruch 1 angegebenen Formel (1), worin
K₁ einen 1- oder 2-Naphthylrest, der durch 1 bis 4 gleiche oder verschiedene Reste aus der Gruppe Hydroxy, Amino, N-Methyl- oder N-Ethylamino, Acetylamino, Benzoylamino und Sulfo weitersubstituiert ist, bedeutet,
Z für einen Phenylrest, der einen faserreaktiven Rest der Formel
- SO₂ - Y (3a)
oder
- CONH - (CH₂)ₘ - SO₂ - Y (3b),
worin Y Vinyl oder β-Sulfatoethyl und m die Zahl 2 oder 3 sind, trägt und weiter unsubstituiert oder durch Sulfo, Methyl, Methoxy, Chlor, Hydroxy oder Methoxy substituiert ist, oder für einen 1- oder 2-Naphthylrest, der einen faserreaktiven Rest der oben angegebenen Formel (3a) trägt und weiter unsubstituiert oder durch Sulfo substituiert ist, steht,
T Fluor oder Chlor ist, und
V, Hydroxy, C₁-C₄-Alkoxy, Morpholino, Amino; unsubstituiertes oder im Alkylteil durch Sulfo, Sulfato, Hydroxy, Carboxy oder Phenyl substituiertes N-C₁-C₄-Alkylamino oder N,N-Di-C₁-C₄-Alkylamino, Cyclohexylamino; unsubstituiertes oder im Phenyl- oder Naphthylteil durch C₁-C₄-Alkyl, C₁-C₄-Alkoxy, Amino, C₂-C₄-Alkanoylamino, Carboxy, Sulfo oder Halogen substituiertes Phenylamino oder Naphthylamino oder unsubstituiertes oder im Alkylteil durch Sulfo, Sulfato, Hydroxy, Carboxy oder Phenyl substituiertes und/oder im Phenylteil durch C₁-C₄-Alkyl, C₁-C₄-Alkoxy, Amino, C₂-C₄-Alkanoylamino, Carboxy, Sulfo oder Halogen substituiertes N-C₁-C₄-Alkyl-N-phenylamino bedeutet, und
(b) eine Verbindung der im Anspruch 1 angegebenen Formel (2), worin
R₁ und R₂ unabhängig voneinander je C₁-C₄-Alkyl sind,
R₃ für Carbamoyl oder Sulfomethyl steht, und
T₁ unabhängig die oben für T angegebene Bedeutung, V₁ unabhängig die oben für V angegebene Bedeutung und Z₁ unabhängig die oben für Z angegebene Bedeutung haben, enthalten.

10. Farbstoffgemische gemäss Anspruch 1, dadurch gekennzeichnet, dass sie
(a) eine Verbindung der im Anspruch 1 angegebenen Formel (1), worin
K₁ einen 1-Naphthylrest, der durch 1 bis 4 gleiche oder verschiedene Reste aus der Gruppe Hydroxy, Amino und Sulfo weitersubstituiert ist, bedeutet,
Z ein faserreaktiver Rest der Formel 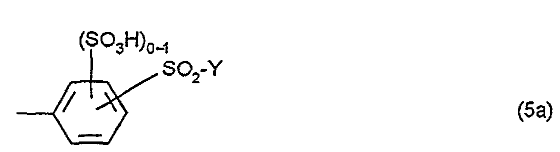 oder 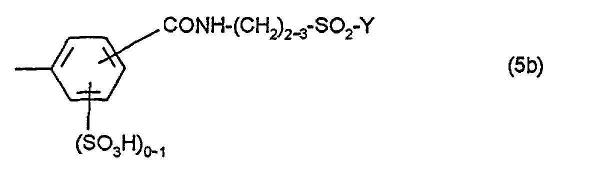 ist und Y Vinyl oder β-Sulfatoethyl bedeutet,
T Fluor oder Chlor ist, und
V für Amino, unsubstituiertes oder durch Hydroxy, Sulfo oder Sulfato substituiertes N-C₁-C₂-Alkylamino oder für Mono- oder Disulfophenylamino steht, und
(b) eine Verbindung der im Anspruch 1 angegebenen Formel (2), worin
R₁ Methyl, R₂ Ethyl und R₃ Carbamoyl oder Sulfomethyl bedeuten, und
T₁ unabhängig die oben für T angegebene Bedeutung, V₁ unabhängig die oben für V angegebene Bedeutung und Z₁ unabhängig die oben für Z angegebene Bedeutung haben, enthalten.

11. Farbstoffgemische gemäss Anspruch 1, dadurch gekennzeichnet, dass sie
(a) eine Verbindung der Formel 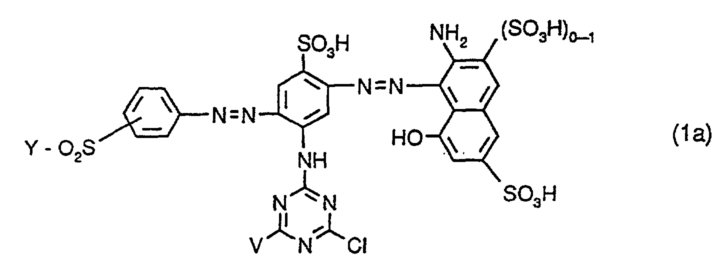 und
(b) eine Verbindung der Formel 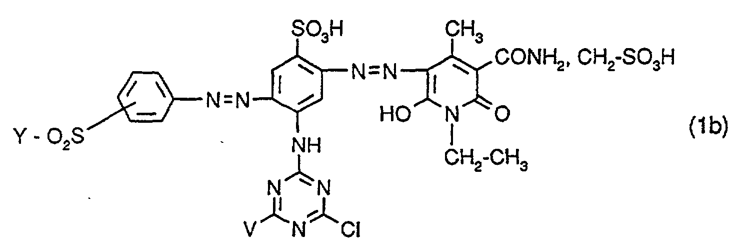
enthalten, worin Y Vinyl oder β-Sulfatoethyl ist und V für Amino, unsubstituiertes oder durch Hydroxy, Sulfo oder Sulfato substituiertes N-C₁-C₂-Alkylamino oder für Mono- oder Disulfophenylamino steht.

12. Farbstoffgemische gemäss einem der Ansprüche 1 bis 11, dadurch gekennzeichnet, dass sie die Verbindungen der Formel (1) und (2) im Gewichtsverhältnis von 25:1 bis 1:1 und vorzugsweise 10:1 bis 1,5:1 enthalten.

13. Verfahren zum Färben oder Bedrucken von hydroxylgruppenhaltigen oder stickstoffhaltigen Fasermaterialien, dadurch gekennzeichnet, dass man diese Fasermaterialien in einer wässrigen Lösung mit einem Farbstoffgemisch gemäss einem der Ansprüche 1 bis 12 in Kontakt bringt.

14. Verfahren gemäss Anspruch 13 zum Färben oder Bedrucken von natürlichen oder synthetischen Polyamidfasermaterialien, besonders von Wolle.

15. Verwendung von Farbstoffgemischen gemäss einem der Ansprüche 1 bis 12 zum Färben oder Bedrucken von natürlichen oder synthetischen Polyamidfasermaterialien, besonders von Wolle.

## Claims

1. A dye mixture comprising
(a) a compound of the formula 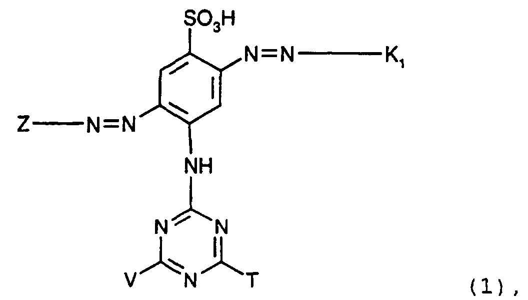 in which
K₁ is a naphthyl radical which is unsubstituted or further substituted by hydroxyl, amino, N-C₁-C₄alkylamino, C₂-C₄alkanoylamino, benzoylamino, sulfo or a radical of the formula -SO₂-Y,
Z is the radical of a diazo component of the benzene or naphthalene series which contains at least one fibre-reactive radical of the formula
- SO₂ - Y (3a),
- CONH - (CH₂)ₘ - SO₂ - Y (3b),
- CONH - (CH₂)ₘ₁ - O - (CH₂)ₘ - SO₂ - Y (3c),
- (O)ₚ - (CH₂)_{q} - CONH - (CH₂)ₘ - SO₂ - Y (3d),
- NH - CO - CHX - CH₂X (3e)
or
- NH - CO - CX = CH₂ (3f),
Y is vinyl or a radical -CH₂-CH₂-U
and U is a leaving group,
X is chlorine or bromine,
p is the number 0 or 1 and
m, m1 and q independently of one another are each an integer from 1 to 6,
T is chlorine, fluorine, bromine, 3-carboxypyridin-1-yl or 3-carbamoylpyridin-1-yl,
V is defined independently as T or is a non-reactive radical from the group consisting of hydroxyl, C₁-C₄alkoxy, phenoxy, C₁-C₄alkylthio, morpholino and substituted or unsubstituted amino, or is a reactive radical of the formula 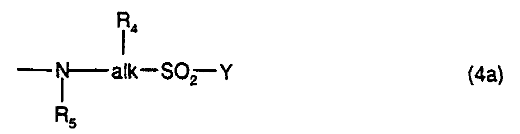 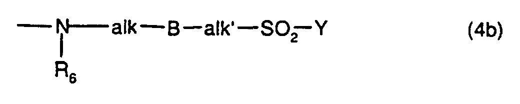 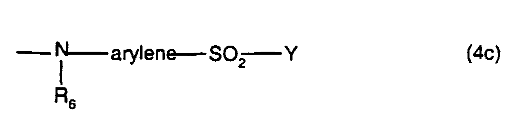 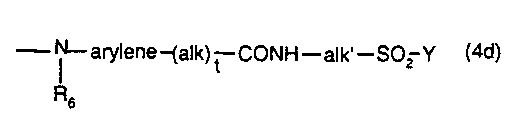 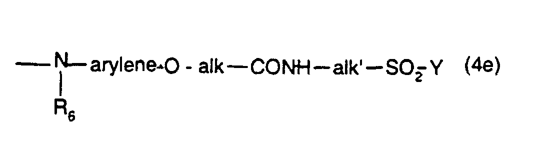 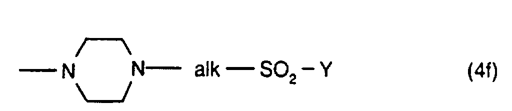 or 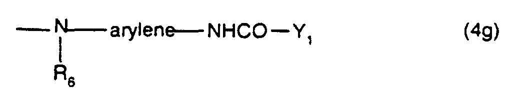
R₄ is hydrogen, hydroxyl, sulfo, sulfato, carboxyl, cyano, halogen, C₁-C₄alkoxycarbonyl, carbamoyl or a group -SO₂-Y,
in which Y is as defined above,
R₅ is hydrogen, C₁-C₄alkyl which is unsubstituted or substituted by hydroxyl, sulfo, sulfato, carboxy or cyano, or a radical 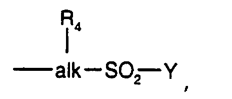
in which R₄ and Y are each as defined above,
R₆ is hydrogen or C₁-C₄alkyl,
alk and alk' independently of one another are each C₁-C₆alkylene,
arylene is a phenylene or naphthylene radical which is unsubstituted or substituted by sulfo, carboxyl, hydroxyl, C₁-C₄alkyl, C₁-C₄alkoxy or halogen,
Y₁ is a group -CHX-CH₂X or -CX=CH₂,
in which X is as defined above,
B is a radical -O- or -NR₆-,
in which R₆ is as defined above, and
t is the number 0 or 1, and
(b) a compound of the formula 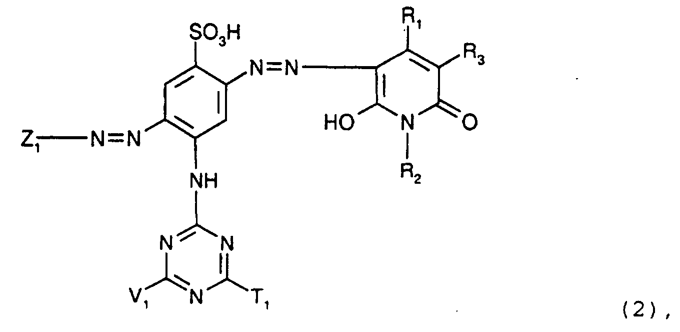 in which
R₁ and R₂ independently of one another are each C₁-C₄alkyl,
R₃ is carbamoyl, sulfomethyl or cyano, and
T₁ is defined independently as above for T,
V₁ is defined independently as above for V, and
Z₁ is defined independently as above for Z.

2. A dye mixture according to claim 1, in which
K₁ in formula (1) is a 1- or 2-naphthyl radical which is further substituted by 1 to 4 identical or different radicals from the group consisting of hydroxyl, amino, N-methyl- or N-ethylamino, acetylamino, benzoylamino and sulfo.

3. A dye mixture according to claim 1 or 2, in which
K₁ is a 1-naphthyl radical which carries 1 to 4 identical or different radicals from the group consisting of hydroxyl, amino and sulfo.

4. A dye mixture according to any one of claims 1 to 3, in which
Z and Z₁ independently of one another are each a phenyl radical, which carries a fibre-reactive radical of the formula (3a) or (3b) defined in claim 1 and is further unsubstituted or substituted by sulfo, methyl, methoxy, chlorine, hydroxyl or methoxy, or are a 1- or 2-naphthyl radical which carries a fibre-reactive radical of the formula (3a) defined in claim 1 and is further unsubstituted or substituted by sulfo.

5. A dye mixture according to any one of claims 1 to 4, in which
Z und Z₁ independently of one another are each a fibre-reactive radical of the formula 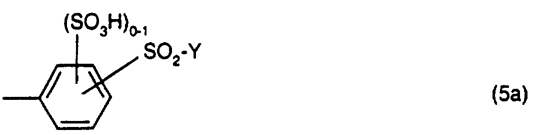 or 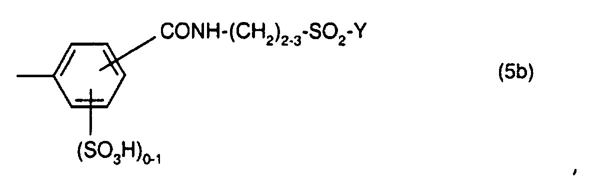 in which Y is vinyl or β-sulfatoethyl.

6. A dye mixture according to any one of claims 1 to 5, in which
T and T₁ independently of one another are each fluorine or chlorine, and preferably each chlorine.

7. A dye mixture according to any one of claims 1 to 6, in which
V and V₁ independently of one another are each hydroxyl, C₁-C₄alkoxy, morpholino or amino; N-C₁-C₄alkylamino or N,N-di-C₁-C₄alkylamino, which is unsubstituted or substituted in the alkyl part by sulfo, sulfato, hydroxyl, carboxyl or phenyl, or cyclohexylamino; phenylamino or naphthylamino which is unsubstituted or substituted in the phenyl or naphthyl part by C₁-C₄alkyl, C₁-C₄alkoxy, amino, C₂-C₄alkanoylamino, carboxyl, sulfo or halogen, or N-C₁-C₄-alkyl-N-phenylamino which is unsubstituted or substituted in the alkyl part by sulfo, sulfato, hydroxyl, carboxyl or phenyl und/or substituted in the phenyl part by C₁-C₄alkyl, C₁-C₄-alkoxy, amino, C₂-C₄alkanoylamino, carboxyl, sulfo or halogen.

8. A dye mixture according to any one of claims 1 to 7, in which
V and V₁ independently of one another are each amino, N-C₁-C₂alkylamino which is unsubstituted or substituted by hydroxyl, sulfo or sulfato, or mono- or disulfophenylamino.

9. A dye mixture according to claim 1, which comprises
(a) a compound of the formula (1) defined in claim 1 in which
K₁ is a 1- or 2-naphthyl radical which is further substituted by 1 to 4 identical or different radicals from the group consisting of hydroxyl, amino, N-methyl- or N-ethylamino, acetylamino, benzoylamino and sulfo,
Z is a phenyl radical which carries a fibre-reactive radical of the formula
- SO₂ - Y (3a)
or
- CONH - (CH₂)ₘ - SO₂ - Y (3b),
in which Y is vinyl or β-sulfatoethyl and
m is the number 2 or 3,
and is further unsubstituted or substituted by sulfo, methyl, methoxy, chlorine, hydroxyl or methoxy, or is a 1- or 2-naphthyl radical which carries a fibre-reactive radical of the formula (3a) as defined above and is further unsubstituted or substituted by sulfo,
T is fluorine or chlorine and
V is hydroxyl, C₁-C₄alkoxy, morpholino or amino; N-C₁-C₄alkylamino or N,N-di-C₁-C₄-alkylamino which is unsubstituted or substituted in the alkyl part by sulfo, sulfato, hydroxyl, carboxyl or phenyl, or cyclohexylamino; phenylamino or naphthylamino which is unsubstituted or substituted in the phenyl or naphthyl part by C₁-C₄alkyl, C₁-C₄alkoxy, amino, C₂-C₄alkanoylamino, carboxyl, sulfo or halogen, or N-C₁-C₄alkyl-N-phenylamino which is unsubstituted or substituted in the alkyl part by sulfo, sulfato, hydroxyl, carboxy or phenyl and/or in the phenyl part by C₁-C₄alkyl, C₁-C₄alkoxy, amino, C₂-C₄alkanoylamino, carboxyl, sulfo or halogen, and
(b) a compound of the formula (2) defined in claim 1, in which
R₁ and R₂ independently of one another are each C₁-C₄alkyl,
R₃ is carbamoyl or sulfomethyl and
T₁ is defined independently as for T above,
V₁ is defined independently as for V above and
Z₁ is defined independently as for Z above.

10. A dye mixture according to claim 1, which comprises
(a) a compound of the formula (1) defined in claim 1, in which
K₁ is a 1-naphthyl radical which is further substituted by 1 to 4 identical or different radicals from the group consisting of hydroxyl, amino and sulfo,
Z is a fibre-reactive radical of the formula 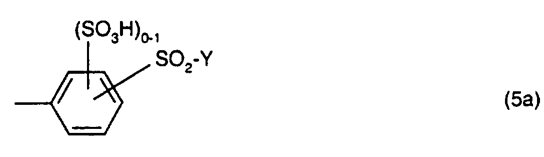 or 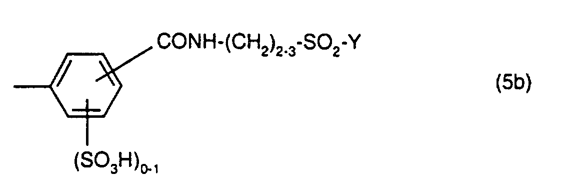
and Y is vinyl or β-sulfatoethyl,
T is fluorine or chlorine and
V is amino, N-C₁-C₂alkylamino which is unsubstituted or substituted by hydroxyl, sulfo or sulfato, or mono- or disulfophenylamino, and
(b) a compound of the formula (2) defined in claim 1, in which
R₁ is methyl,
R₂ is ethyl and
R₃ is carbamoyl or sulfomethyl, and
T₁ is defined independently as for T above,
V₁ is defined independently as for V above and
Z₁ is defined independently as for Z above.

11. A dye mixture according to claim 1, which comprises
(a) a compound of the formula 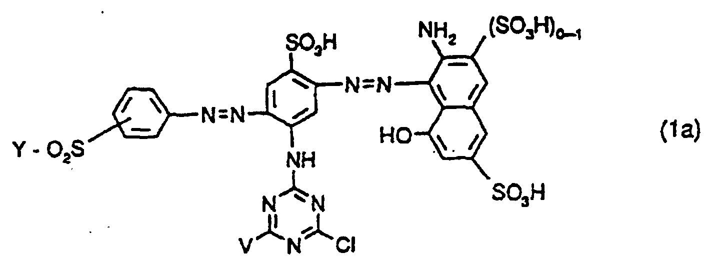 and
(b) a compound of the formula 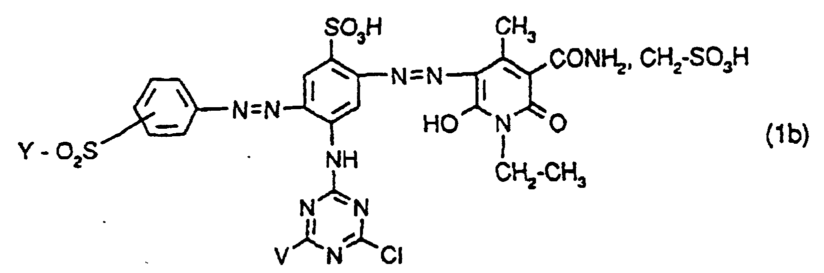 in which Y is vinyl or β-sulfatoethyl and V is amino, N-C₁-C₂alkylamino which is unsubstituted or substituted by hydroxyl, sulfo or sulfato, or mono- or disulfophenylamino.

12. A dye mixture according to any one of claims 1 to 11, which comprises the compounds of the formula (1) and (2) in a weight ratio of 25:1 to 1:1, and preferably 10:1 to 1.5:1.

13. A process for dyeing or printing fibre material containing hydroxyl groups or nitrogen, which comprises bringing these fibre materials into contact with a dye mixture according to any one of claims 1 to 12 in an aqueous solution.

14. A process according to claim 13 for dyeing or printing naturally occurring or synthetic polyamide fibre materials, especially wool.

15. The use of a dye mixture according to any one of claims 1 to 12 for dyeing or printing naturally occurring or synthetic polyamide fibre materials, especially wool.

## Revendications

1. Mélange de colorants contenant
(a) un composé de formule 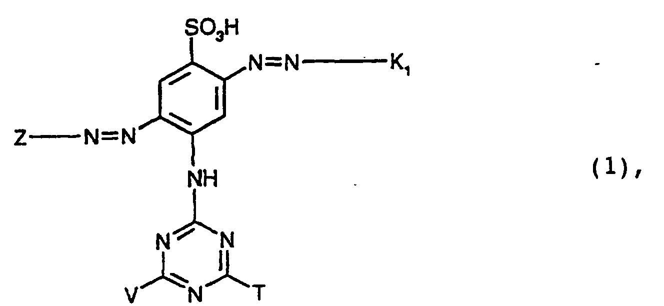 où
K₁ représente un reste naphtyle non substitué ou substitué encore par des substituants hydroxy, amino, N-(alkyl en C₁-C₄) amino, (alcanoyl en C₂-C₄) amino, benzoylamino, sulfo ou un reste de formule -SO₂-Y,
Z représente le reste d'un composant diazoïque de la série du benzène ou du naphtalène, qui présente au moins un reste réactif sur la fibre de formule
-SO₂-Y (3a),
-CONH-(CH₂)ₘ-SO₂-Y (3b),
-CONH-(CH₂)ₘ₁-O-(CH₂)ₘ-SO₂-Y (3c),
(O)ₚ-(CH₂)_{q}-CONH-(CH₂)ₘ-SO₂-Y (3d),
-NH-CO-CHX-CH₂X (3e)
ou
-NH-CO-CX=CH₂ (3f),
Y représente un groupe vinyle ou un reste de formule -CH₂-CH₂-U et U est un groupe partant,
X représente un atome de chlore ou de brome,
p vaut 0 ou 1 et m, m1 et q représentent chacun, indépendamment l'un de l'autre, un nombre entier de 1 à 6,
T représente un atome de chlore, de fluor, de brome, un groupe 3-carboxypyridin-1-yle ou 3-carbamoyl-pyridin-1-yle,
V possède indépendamment la signification de T ou représente un reste non réactif pris parmi hydroxy, alkoxy en C₁-C₄, phénoxy, (alkyl en C₁-C₄)-thio, morpholino et amino éventuellement substitué ou un reste réactif de formule 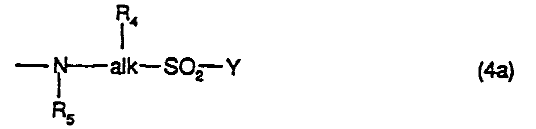 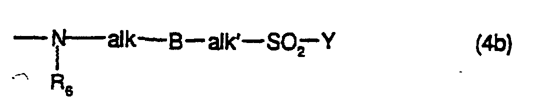 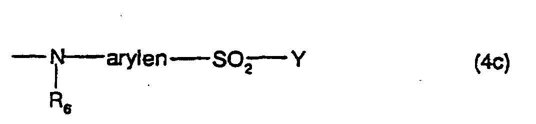 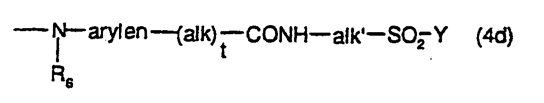 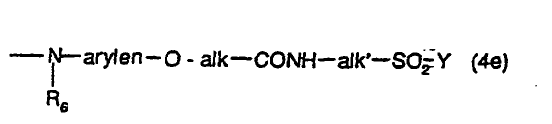 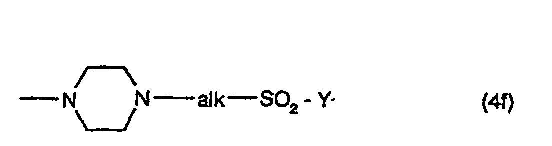 ou 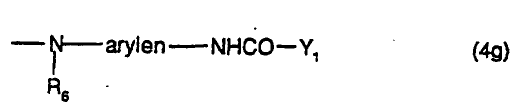
R₄ représente un atome d'hydrogène, des groupes hydroxy, sulfo, sulfato, carboxy, cyano, halogène, (alkoxy en C₁-C₄)-carbonyle, carbamoyle ou un groupe -SO₂-Y, où Y possède la signification donnée auparavant,
R₅ représente un atome d'hydrogène, un groupe alkyle en C₁-C₄ éventuellement substitué par des substituants hydroxy, sulfo, sulfato, carboxy ou cyano ou un reste de formule 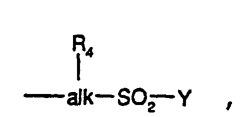 où R₄ et Y possèdent chacun la signification donnée auparavant,
R₆ représente un atome d'hydrogène ou un groupe alkyle en C₁-C₄,
alk et alk' représentent chacun, indépendamment l'un de l'autre, un groupe alkylène en C₁-C₆,
arylène représente un reste phénylène ou naphtylène non substitué ou substitué par des substituants sulfo, carboxy, hydroxy, alkyle en C₁-C₄, alkoxy en C₁-C₄ ou halogène,
Y₁ représente un groupe -CHX-CH₂X ou -CX=CH₂, où X possède la signification donnée ci-dessus,
B représente un reste -O- ou -NR₆-, où R₆ possède la signification donnée ci-dessus, et
t vaut 0 ou 1, et
(b) un composé de formule 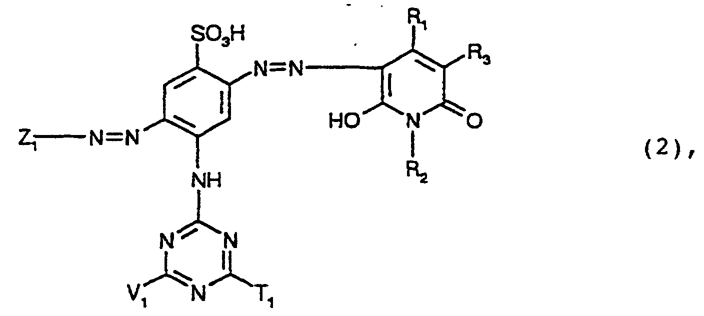 où
R₁ et R₂ représentent chacun, indépendamment l'un de l'autre, un groupe alkyle en C₁-C₄,
R₃ représente un groupe carbamoyle, sulfométhyle ou cyano, et
T₁ possède indépendamment la signification donnée auparavant pour T, V₁ possède indépendamment la signification donnée auparavant pour V et Z₁ possède indépendamment la signification donnée auparavant pour Z.

2. Mélanges de colorants selon la revendication 1, caractérisés en ce que K₁ à la formule (1) représente un reste 1- ou 2-naphtyle qui est substitué encore par 1 à 4 restes identiques ou différents pris parmi les restes hydroxy, amino, N-méthyl- ou N-éthylamino, acétylamino, benzoylamino et sulfo.

3. Mélanges de colorants selon la revendication 1 ou 2, caractérisé en ce que K₁ représente un reste 1-naphtyle qui porte 1 à 4 restes identiques ou différents pris parmi les restes hydroxy, amino et sulfo.

4. Mélanges de colorants selon l'une des revendications 1 à 3, caractérisé en ce que Z et Z₁ représentent chacun, indépendamment l'un de l'autre, un reste phényle, qui porte un reste réactif sur la fibre de formule (3a) ou (3b) donnée à la revendication 1 et qui n'est substitué de plus ou substitué encore par des substituants sulfo, méthyle, méthoxy, chlore, hydroxy ou méthoxy, ou représentent un reste 1- ou 2-naphtyle qui porte un reste réactif sur la fibre de formule (3a) donnée à la revendication 1 et qui n'est pas substitué de plus ou substitué par un substituant sulfo.

5. Mélanges de colorants selon l'une des revendications 1 à 4, caractérisés en ce que Z et Z₁ représentent chacun, indépendamment l'un de l'autre, un reste réactif sur la fibre de formule 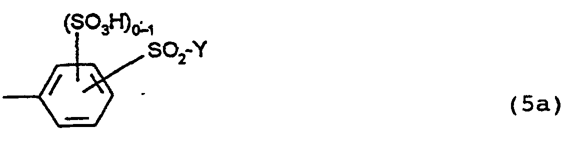 ou 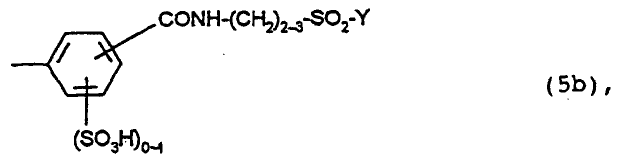 où Y représente un reste vinyle ou β-sulfatoéthyle.

6. Mélanges de colorants selon l'une des revendications 1 à 5, caractérisés en ce que T et T₁ représentent chacun, indépendamment l'un de l'autre, un atome de fluor ou de chlore et de préférence, chacun représente un atome de chlore.

7. Mélanges de colorants selon l'une des revendications 1 à 6, caractérisés en ce que V et V₁ représentent chacun, indépendamment l'un de l'autre, des groupes hydroxy, alkoxy en C₁-C₄, morpholino, amino ; N-(alkyl en C₁-C₄)amino ou N,N-di-(alkyl en C₁-C₄)amino non substitué ou substitué dans le fragment alkyle par des substituants sulfo, sulfato, hydroxy, carboxy ou phényle, cyclohexylamino ; phénylamino ou naphtylamino non substitué ou substitué dans le fragment phényle ou naphtyle par des substituants alkyle en C₁-C₄, alkoxy en C₁-C₄, amino, (alcanoyl en C₂-C₄)amino, carboxy, sulfo ou halogène, ou N-(alkyl en C₁-C₄)-N-phénylamino non substitué ou substitué dans le fragment alkyle par des substituants sulfo, sulfato, hydroxy, carboxy ou phényle et/ou substitué dans le fragment phényle par des substituants alkyle en C₁-C₄, alkoxy en C₁-C₄, amino, (alcanoyl en C₂-C₄)amino, carboxy, sulfo ou halogène.

8. Mélanges de colorants selon l'une des revendications 1 à 7, caractérisés en ce que V et V₁ représentent chacun, indépendamment l'un de l'autre, des groupes amino, N-(alkyl en C₁-C₂)amino non substitué ou substitué par des substituants hydroxy, sulfo ou sulfato, ou représente mono- ou disulfophénylamino.

9. Mélanges de colorants selon la revendication 1, caractérisés en ce qu'ils contiennent
(a) un composé de formule (1) indiquée à la revendication 1, où
K₁ représente un reste 1- ou 2-naphtyle qui est substitué encore par 1 à 4 restes identiques ou différents pris parmi les restes hydroxy, amino, N-méthyl- ou N-éthylamino, acétylamino, benzoylamino et sulfo,
Z représente un reste phényle qui porte un reste réactif sur la fibre de formule
-SO₂-Y (3a),
-CONH-(CH₂)ₘ-SO₂-Y (3b),
où Y représente un groupe vinyle ou β-sulfatoéthyle et m vaut 2 ou, et qui est n'est pas substitué davantage ou substitué encore par des substituants sulfo, méthyle, méthoxy, chlore, hydroxy ou méthoxy, ou représente un reste 1- ou 2-naphtyle qui porte un reste réactif sur la fibre de formulé (3a) indiquée ci-dessus et qui n'est pas substitué davantage ou substitué encore par un substituant sulfo,
T représente un atome de fluor ou de chlore, et
V représente des groupes hydroxy, alkoxy en C₁-C₄, morpholino, amino ; N-(alkyl en C₁-C₄) amino ou N,N-di-(alkyl en C₁-C₄)amino non substitué ou substitué dans le fragment alkyle par des substituants sulfo, sulfato, hydroxy, carboxy ou phényle, cyclohexylamino ; phénylamino ou naphtylamino non substitué ou substitué dans le fragment phényle ou- naphtyle par des substituants alkyle en C₁-C₄, alkoxy en C₁-C₄, amino, (alcanoyl en C₂-C₄)amino, carboxy, sulfo ou halogène, ou N-(alkyl en C₁-C₄)-N-phénylamino non substitué ou substitué dans le fragment alkyle par des substituants sulfo, sulfato, hydroxy, carboxy ou phényle et/ou substitué dans le fragment phényle par des substituants alkyle en C₁-C₄, alkoxy en C₁-C₄, amino, (alcanoyl en C₂-C₄)amino, carboxy, sulfo ou halogène, et
(b) un composé de formule (2) indiquée ci-dessus, où
R₁ et R₂ représentent chacun, indépendamment l'un de l'autre, un groupe alkyle en C₁-C₄,
R₃ représente un groupe carbamoyle ou sulfométhyle, et
T₁ possède indépendamment la signification donnée ci-dessus pour T, V₁ possède indépendamment la signification donnée ci-dessus pour V, et Z₁ possède indépendamment la signification donnée ci-dessus pour Z.

10. Mélanges de colorants selon la revendication 1, caractérisés en ce qu'ils contiennent
(a) un composé de formule (1) donnée à la revendication 1, où
K₁ représente un reste 1-naphtyle qui est substitué encore par 1 à 4 substituants identiques ou différents pris parmi hydroxy, amino et sulfo,
Z représente un reste réactif sur la fibre de formule 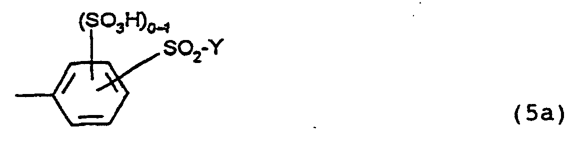 ou 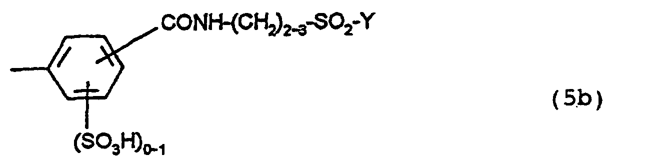
et Y représente un groupe vinyle ou β-sulfatoéthyle,
T représente un atome de fluor ou de chlore, et
V représente des groupes amino, N-(alkyl en C₁-C₂)amino non substitué ou substitué par des substituants hydroxy, sulfo ou sulfato, ou mono- ou disulfophénylamino, et
(b) un composé de formule (2) indiquée auparavant, où
R₁ représente un groupe méthyle, R₂ représente un groupe éthyle et R₃ représente un groupe carbamoyle ou sulfométhyle, et
T₁ possède indépendamment la signification donnée ci-dessus pour T, V₁ possède indépendamment la signification donnée ci-dessus pour V, et Z₁ possède indépendamment la signification donnée ci-dessus pour Z.

11. Mélanges de colorants selon la revendication 1, caractérisés en ce qu'ils contiennent
(a) un composé de formule 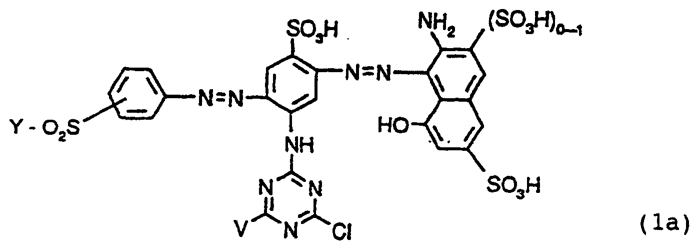 et
(b) un composé de formule 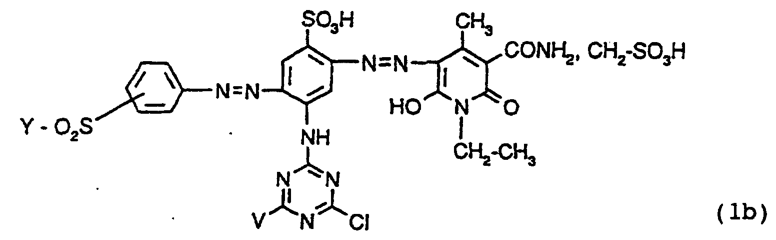
où Y représente un groupe vinyle ou b-sulfatoéthyle et V représente des groupes amino, N-(alkyl en C₁-C₂)-amino non substitué ou substitué par des substituants hydroxy, sulfo ou sulfato, ou représente mono- ou disulfophénylamino.

12. Mélanges de colorants selon l'une des revendication 1 à 11, caractérisés en ce qu'ils contiennent des composés de formule (1) et (2) dans un rapport pondéral de 25:1 à 1:1 et de préférence de 10:1 à 1,5:1.

13. Procédé pour la teinture ou l'impression de matières fibreuses azotées ou contenant des groupes hydroxyle, caractérisés en ce qu'on met en contact ces matières fibreuses dans une solution aqueuse avec un mélange de colorants selon l'une des revendications 1 à 12.

14. Procédé selon la revendication 13 pour la teinture ou l'impression de matières fibreuses polyamides naturelles ou synthétiques, notamment de laine.

15. Utilisation de mélanges de colorants selon Tune des revendications 1 à 12 pour la teinture ou l'impression de matières fibreuses polyamides naturelles ou synthétiques, notamment de laine.
